# EUROPEAN PATENT APPLICATION

(11) **EP 3 753 970 A1**
(43) Date of publication of application: **23.12.2020**
(21) Application number: 19305791.6
(22) Date of filing: 19.06.2019
(51) Int. Cl.: C08G 69/26, C08L 77/06, C08L 77/10

(54) **COMPOSITION COMPRISING PIPERIDINE-CONTAINING POLYAMIDE**

(71) Applicant: Rhodia Operations, 93300 Aubervilliers (FR)
(72) Inventor: LAHARY, Pierre-Yves, 69006 Lyon (FR); BOCAHUT, Anthony, 20148 Milano (DE); BADEL, Thierry, 69008 Lyon (FR)
(74) Representative: Roussel, Sandrine

(57) **Abstract**

The present invention relates in particular to a composition comprising a non-crosslinked polyamide comprising structural units derived from piperidine and an aromatic dicarboxylic acid and a (copolyamide different from the non-crosslinked polyamide. The invention further relates to a method of preparing such composition, molded articles comprising such composition and thermoplastic composites comprising such composition.

## Description

### FIELD OF THE INVENTION

The present invention relates in particular to a composition comprising a non-crosslinked polyamide comprising structural units derived from piperidine and an aromatic dicarboxylic acid and a (copolyamide different from the non-crosslinked polyamide. The invention further relates to a method of preparing such composition, molded articles comprising such composition and thermoplastic composites comprising such composition.

Synthetic linear polyamides are generally prepared by condensation of substantially equimolecular amounts of a diamine and a dicarboxylic acid, or its amide-forming derivatives or by the self-condensation of relatively long chain amino acids or their amide-forming derivatives.

According to the composition of their main chain, polyamides can be classified as aliphatic polyamides, like PA6.6 being prepared from hexamethylenediamine and adipic acid, semi-aromatic polyamides, like PA6.T being prepared from hexamethylenediamine and terephthalic acid, and aromatic polyamides being prepared, for example, from phenylenediamine and terephthalic acid. The mechanical properties of polyamides depend on their molecular weight and the constitution of their monomers, i.e. the selection of the diamines and diacids.

Despite the large number of known polyamides having a wide range of mechanical properties, there is still a need for further improvements, for example with respect to the glass transition temperature which should not be too high and the ultimate tensile strength (maximum stress) which for certain applications should be high. For example, the known polyamide PA6.I, which is prepared from hexamethylenediamine and isophthalic acid, has a desirable glass transition temperature of about 120°C but an undesirably low maximum stress. On the other hand, the present inventors found that replacing the hexamethylenediamine residue in PA6.I by a piperazine residue, as for example suggested in US 4,223,105, results in polymers having an undesirable high glass transition temperature of about 214°C.

It is therefore an object of the present invention to provide novel composition of polyamides which overcome one or more of the drawbacks of the known polyamides, in particular with respect to their glass transition temperature and mechanical properties, such as their ultimate tensile strength. At the same time, the polyamides should have a low melt viscosity to facilitate molding.

The present inventors found that by replacing the piperazine residues in the polyamides known in the prior art by piperidine residues not only the glass transition temperature of the obtained polymer can be significantly decreased but at the same time the ultimate tensile strength of the polymer can be significantly increased compared to the ultimate tensile strength of the known polyamide PA6.I.

According to one of its aspects, the present invention therefore relates to a composition comprising at least:
a) a non-crosslinked polyamide comprising structural units of formula (1): 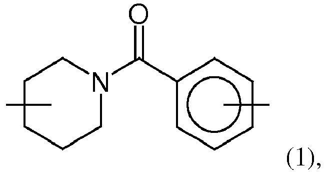 and
b) a (co)polyamide different from the non-crosslinked polyamide a).

Concentration of the non-crosslinked polyamide a) in the composition according to the invention may be for instance from 10 wt.% to 95 wt.%, preferably from 10 wt.% to 80 wt.%, more preferably from 20 wt.% to 80 wt.%, relative to the total weight of the composition.

Notably concentration of the non-crosslinked polyamide a) in the composition according to the invention may be for instance from 30 wt.% to 50 wt.%, relative to the total weight of the composition. According to the invention, concentration of the non-crosslinked polyamide a) in the composition according to the invention may be for instance from 40 wt.% to 80 wt.%, relative to the total weight of the composition. Concentration of the non-crosslinked polyamide a) in the composition according to the invention may also be 20 wt.%, 30 wt.% , 40, wt.%, 50 wt.%, 60 wt.%, 70 wt.%, 80 wt.% or 90wt.%, or any values comprised between those values, relative to the total weight of the composition.

Of course the non crosslinked polyamide a) of the composition can include a plurality of distinct polyamide. In such embodiments, the total concentration of the non-crosslinked polyamide a)is within the ranges described above.

Here, and throughout the invention any bond crossing a ring structure means that the following atom is connected to any position of the ring by replacing a hydrogen atom. For example, in formula (1), the next (not shown) atom to which the pyridine ring is linked may be attached at 2-, 3- or 4-position relative to the nitrogen atom. The next (not shown) atom to which the phenyl ring is linked may be attached at ortho, meta or para position relative to the carboxy group.

In one embodiment, the non-crosslinked polyamide a) according to the invention comprises structural units of formula (2): 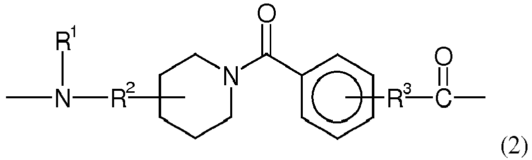
wherein R¹ is hydrogen, an organic monovalent residue, or an organic divalent residue which forms a ring together with R², and
R² and R³ are independently a bond or an organic divalent residue.

In the above structural unit of formula (2), R¹ preferably is hydrogen or a linear, branched, cyclic and/or aromatic C₁₋₃₀ hydrocarbon residue. Optionally, this residue may form a ring together with R². If such ring is formed, any atom of the R¹ hydrocarbon residue may be attached to any atom of R².

In the context of the present invention the term "hydrocarbon residue" is understood as a residue which mainly consists of carbon and hydrogen atoms. It is, however, also possible that the hydrocarbon residue contains heteroatoms, such as O, N, P, S, etc. In a preferred embodiment, the hydrocarbon residue consists of carbon and hydrogen atoms.

R² and R³ may independently be a bond or a linear, branched, cyclic and/or aromatic C₁₋₃₀ hydrocarbon residue, wherein the hydrocarbon residue is defined as above.

In a preferred embodiment, R¹ in the structural unit of formula (2) is hydrogen or a linear, branched, cyclic and/or aromatic C₁₋₃₀ hydrocarbon residue which optionally forms a ring together with R², and R² and R³ are independently a bond or a linear, branched, cyclic and/or aromatic C₁₋₃₀ hydrocarbon residue.

In a further embodiment, R¹ is hydrogen or a C₁₋₆ alkyl residue, which optionally forms a ring together with R², R² is a bond or a linear, branched and/or cyclic C₁₋₂₄ alkyl residue, preferably a bond or a linear C₁₋₂₄ alkyl residue, more preferably a bond or a C₁₋₆ alkyl residue, and R³ is a bond, a C₁₋₆ alkylaryl residue or an aryl residue preferably a bond or a phenyl residue.

The non-crosslinked polyamide a) according to the invention may comprise other structural units in addition to the above structural units. For example, the non-crosslinked polyamide a) may comprise additional structural units being derived from caprolactame, hexamethylenediamine, phenylenediamine, adipic acid, etc. It is, however, preferred that such additional structural units are present in an amount of less than 50 %, preferably less than 30 % and even more preferably of less than 20 % of the total number of structural units in the polyamide. More preferably, the polyamide is a homopolymer which consists of structural units of formula (2).

The non-crosslinked polyamide a) is obtainable by polymerization of a diamine of formula (3): 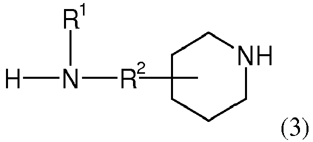 wherein R¹ and R² are defined as above;
with an aromatic dicarboxylic acid, ester or halogenide of formula (4): 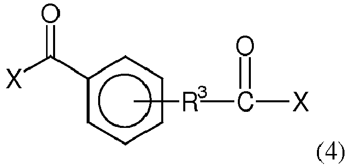 wherein R³ is defined as above and X is hydroxy, halogen, C₁₋₆ alkoxy or C₂₋₂₀ aryloxy, preferably phenoxy.

Without otherwise specified, in the instant specification polyamide means homopolyamide or copolyamide.
In the instant specification, homopolyamide means a polyamide comprising an amount of one repeating unit of at least 95% relative to the total number of repeating units in the polyamide. On the other hand copolyamide means a polyamide comprising less than 95% of one repeating unit relative to the total number of repeating units in the polyamide.

The non-crosslinked polyamide a) may be amorphous or semi-crystalline. By semi-crystalline is meant a polyamide having an amorphous phase and a crystalline phase, in particular the degree of crystallinity is in the range of 1 to 85%. What is meant by amorphous is a polyamide having no crystalline phase detected by thermal analysis, such as DSC (Differential Scanning Calorimetry) and with X-ray diffraction. Heat of fusion (ΔHf) may range from 2 to 170 J/g as measured according to ASTM D3418 using a heating and cooling rate of 10°C/min.

By thermoplastic polyamide is meant a polyamide having a temperature above which the material is softening and melts without being degraded and which is hardening below such a temperature.

The non-crosslinked polyamide a) may comprise an amount of repeating units of formula (1), comprising at least one amide bond, from 2 to 100%, preferably from 10 to 100% relative to the total number of repeating units in the polyamide.

Advantageously, the non-crosslinked polyamide a) is thermoplastic. The non-crosslinked polyamide a) may be amorphous; in this case it may have a Tg≦280°C, which can be measured according to ASTM D3418 using a heating and cooling rate of 10oC/min. The non-crosslinked polyamide a) may also semi-crystalline, and may have a Tm of less or equal to 370°C, notably less or equal to 350°C, particularly comprised from 150°C to 370°C.

In one embodiment, the diamine from which the non-crosslinked polyamide a) according to the invention is obtainable has the formula (5): 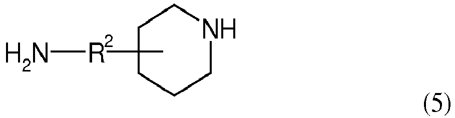 wherein R² is defined as above. Preferably, R² is attached at 2- or 4-position of the piperidine ring.

In another embodiment, the diamine, from which the non-crosslinked polyamide a) according to the invention is obtainable has the formula (6): 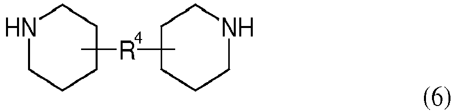 wherein R⁴ is a bond or a linear, branched and/or cyclic C₁₋₂₄ alkyl residue, preferably a bond or a linear C₁₋₂₄ alkyl residue.

In a preferred embodiment, the diamine from which the non-crosslinked polyamide a) according to the invention is obtainable has the formula (7): 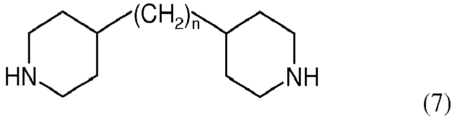 wherein n is an integer of 0 to 24, preferably 0 to 16, more preferably 2 to 16, even more preferably 3 to 10.

Examples of suitable diamines, from which the non-crosslinked polyamide a) according to the invention can be obtained are 4,4'-bipiperidine, 4,4'-ethylenedipiperidine, 4,4'-trimethylenedipiperidine, 4-aminopiperidine, 4-(aminomethyl)piperidine, 2-(aminomethyl)piperidine, 3-(aminoethyl)piperidine, and 4-(aminobutyl)piperidine. Preferred diamines are 4,4'-trimethylenedipiperidine and 4-aminopiperidine.

The amount of diamine of formula (3) may be comprised from 2 to 100 mol %, preferably from 10 to 100 mol % relative to the total amount of diamine monomers in the polyamide.

The amount of repetitive units of formula (1) may be comprised from 2 to 100 mol %, preferably from 10 to 100 mol % relative to the total amount of repetitive units in the polyamide.

The non-crosslinked polyamide a) may also comprise at least one other diamine. This diamine may respond to the following formula H₂N-R-NH₂ wherein R is an aliphatic, an aromatic, an arylaliphatic or an alkylaromatic radical. In particular the diamine R radical, especially when free of heteroatom such as oxygen, comprises from 1 to 36 carbon atoms and more particularly from 4 to 14 carbon atoms.

By "arylaliphatic" is meant a radical comprising an aromatic cycle and which is linked to the main chain of the polymer by bonds on the aliphatic part, such as the radical meta-xylylene, for example deriving from meta-xylylene diamine.

By "alkylaromatic" is meant a radical substituted by alkyl radical(s) and which is linked to the main chain of the polymer by bonds on the aromatic part.

The radical R of the diamine may be free of heteroatom, or may comprise a heteroaom, such as oxygen, nitrogen, phosphorus or sulphur, in particular oxygen or sulphur, and more particularly oxygen. When a heteroatom is present it may:
- interrupt the chain of the radical, for example as an ether function,
- be in a functional group interrupting the chain of the radical, such as carbonyl or sulfone function, and/or
- be in a function grafted on the chain, such as a hydroxyl, sulfonic or sulfonate functions.

When the R radical is aliphatic it may be free of heteroatom. The aliphatic radical may be alicyclic or cycloaliphatic.

The diamines comprising an alicyclic aliphatic radical may comprise from 2 to 12 carbon atoms, they may be chosen from 1,2-diaminoethane, 1,3-diaminopropane, 1,3-diaminobutane, 1,4-diaminobutane, 1,5-diaminopentane, 1,6-diaminohexane or hexamethylene diamine (HMD), 2-methyl pentamethylene diamine, 2-methyl hexamethylene diamine, 3-methyl hexamethylene diamine, 2,5-dimethyl hexamethylene diamine, 2,2-dimethylpentamethylene diamine, 1,8-diaminooctane, methyl-1,8-diamino octane, in particular as the mixture of methyl-1,8-diamino octane and 1,9-diamino nonane sold by Kuraray, 1,9-diamino nonane, 5-methylnonane diamine, 1,10-diamino decane or decamethylenediamine, 1,12-diamino dodecane, or dodecamethylene diamine, 2,2,4-trimethyl hexamethylene diamine and/or 2,4,4-trimethyl hexamethylene diamine, and/or 2,2,7,7-tetramethyl octamethylene diamine.

The aliphatic radical R may be a cycloaliphatic radical, in particular mono- or dicyclic. Each cycle may comprise from 4 to 8 carbon atoms, more particularly the cycle comprise 4, 5 or 6 carbon atoms. The cycloaliphatic radical may be saturated or unsaturated, and may comprise one or two double bonds. The cycloaliphatic radical may comprise from 6 to 12 carbon atoms. Among the cycloaliphatic diamines may be cited 1,2-diaminocyclohexane, 1,3-diaminocyclohexane, 1,4-diaminocyclohexane, in particular trans stereoisomer, the 4,4'-methylenebis(cyclohexyl amine), 1,3-bis(aminomethyl)cyclohexane, 1,4-bis(aminomethyl)cyclohexane, diaminodicyclohexyl-methane, isophoronediamine, C36 diamine dimer, and 2,5-bis(aminomethyl)tetrahydrofuran, being cis, trans or a mixture of the stereoisomers.

The aliphatic radical R may also comprise at least one heteroatom, in particular oxygen. Among this type of radical may be cited polyether diamines such as Jeffamine® and Elastamine®, from Huntsman, in particular having a molecular weight ranging from 100 to 5000 g/mol.

The diamine R radical may be aromatic, arylaliphatic or alkylaromatic, it may comprise from 6 to 24 carbon atoms, in particular from 6 to 18 carbon atoms and more particularly from 6 to 10 carbon atoms. It may be a mono- or di-cyclo compound, such as benzene or naphthalene.

The aromatic, arylaliphatic or alkylaromatic diamine may be chosen from diaminodiphenylmethane and its isomers, sulfonyldianiline and its isomers, 3,4'-oxydianiline also called 3,4'-diaminodiphenyl ether, 1,3-bis-(4-aminophenoxy)benzene, 1,3-bis-(3-aminophenoxy)benzene ; 4,4'-oxydianiline also called 4,4'-diaminodiphenyl ether, 1,4-diaminobenzene, 1,3-diaminobenzene, 1,2-diaminobenzene, 2,2'-bis(trifluoromethyl)benzidene, 4,4'-diaminobiphenyl; 4,4'-diaminodiphenyl sulphide, 9,9'-bis(4-amino)fluorene; 4,4'-diaminodiphenyl propane, 4,4'-diaminodiphenyl methane, benzidine, 3,3'-dichlorobenzidine, 3,3'-diaminodiphenyl sulfone, 4,4'-diaminodiphenyl sulfone, 1,5-diamino naphthalene, 4,4'-diaminodiphenyl diethylsilane, 4,4'-diamino diphenysilane, 4,4'-diaminodiphenyl ethyl phosphine oxide, 4,4'-diamino diphenyl N-methyl amine, 4,4'-diamino diphenyl N-phenyl amine, m-phenylene diamine, p-phenylene diamine, m-xylylenediamine, p-xylylendiamine, and 2,5-bis(aminomethyl)furan.

In particular the diamine is chosen from m-phenylene diamine, p-phenylene diamine, m-xylylenediamine, p-xylylenediamine, hexamethylenediamine, 2-methylpentamethylene-diamine, 1,9-diaminononane, 1,10-diaminodecane, 1,12-diaminododecane, diaminodiphenylmethane and sulfonyldianiline.

The aromatic dicarboxylic acid, ester or halogenide from which the non-crosslinked polyamide a) according to the invention can be obtained is not particularly limited and can be selected from known aromatic dicarboxylic acids and their derivatives. In a preferred embodiment, the dicarboxylic acid, ester or halogenide has the above formula (4) wherein in a more preferred embodiment R³ is a bond or aryl, even more preferably a bond or phenyl.

The dicarboxylic acid may be an aromatic diacid [acid (AR)], in particular chosen from isophthalic acid, terephthalic acid, orthophthalic acid, naphthalene dicarboxylic acid, more particularly 2,6-napthalene dicarboxylic acid, 2,7-napthalene dicarboxylic acid, 1,4-napthalene dicarboxylic acid, 2,3-napthalene dicarboxylic acid, 1,8-napthalene dicarboxylic acid, and 1,2-napthalene dicarboxylic acid, 2,5-pyridine dicarboxylic acid, 2,4-pyridine dicarboxylic acid, 3,5-pyridine dicarboxylic acid, 2,2-bis-(4-carboxyphenyl)propane, bis(4-carboxyphenyl)methane, 2,2-bis-(4-carboxyphenyl)hexafluoropropane, 2,2-bis-(4-carboxyphenyl)ketone, 4,4'-bis(4-carboxyphenyl)sulfone, 2,2-bis(3-carboxyphenyl)propane, bis(3-carboxyphenyl)methane, 2,2-bis-(3-carboxyphenyl)hexafluoropropane, 2,2-bis-(3-carboxyphenyl)ketone, bis(3-carboxyphenyl)methane and 4,4'-biphenyl dicarboxylic acid, 2-hydroxyterephthalic acid, 5-hydroxyisophthalic acid, 4-hydroxyisophthalic acid, 2,5-dihydroxyterephthalic acid, sodium 5-sulfoisophthalate, or AISNa, lithium 5-sulfoisophthalate, or AISLi, potassium 5-sulfoisophthalate, or AISK, and 2,5-furandicarboxylic acid.

Examples of suitable dicarboxylic acids from which the non-crosslinked polyamide a) according to the invention can be obtained are isophthalic acid, terephthalic acid, diphenic acid, and biphenyl-4,4'-dicarboxylic acid, among which isophthalic acid, terephthalic acid and diphenic acid are preferred.

The non-crosslinked polyamide a) mays also comprise also at least one, in particular one or two, and more particularly one dicarboxylic acid.

The dicarboxylic acid may be an aliphatic diacid [acid (AL), herein after], in particular alicyclic, and more particularly chosen from oxalic acid (HOOC-COOH), malonic acid (HOOC-CH₂-COOH), succinic acid (HOOC-(CH₂)₂-COOH), glutaric acid (HOOC-(CH₂)₃-COOH), 2-methyl-glutaric acid (HOOC-CH(CH₃)-(CH₂)₂-COOH), 2,2-dimethyl-glutaric acid (HOOC-C(CH₃)₂-(CH₂)₂-COOH), adipic acid (HOOC-(CH₂)₄₋-COOH), 2,4,4-trimethyl-adipicacid (HOOC-CH(CH₃)-CH₂-C(CH₃)₂-CH₂-COOH), pimelic acid (HOOC-(CH₂)₅-COOH), suberic acid (HOOC-(CH₂)₆-COOH), azelaic acid (HOOC-(CH₂)₇-COOH), sebacic acid (HOOC-(CH₂)₈-COOH), undecanedioic acid (HOOC-(CH₂)₉-COOH), dodecanedioic acid (HOOC-(CH₂)₁₀-COOH), tridecanedioic acid (HOOC-(CH₂)₁₁-COOH), tetradecanedioic acid (HOOC-(CH₂)₁₂-COOH), pentadecanedioic acid (HOOC-(CH₂)₁₃-COOH), hexadecanedioic acid (HOOC-(CH₂)₁₄-COOH), octadecanedioic acid (HOOC-(CH₂)₁₆-COOH) and C₃₆ fatty acid dimer, in particular the one known as Pripol® by Croda.

The dicarboxylic acid may be a cycloaliphatic dicarboxylic acid comprising at least one carbocyclic ring having from 4 to 8 carbon atoms in the ring, like e.g. cyclohexane dicarboxylic acids, in particular such as 1,2-cyclohexane carboxylic acid, 1,3-cyclohexane dicarboxylic acid and 1,4-cyclohexane dicarboxylic acid, 2,5-tetrahydrofurandicarboxylic acid, these acids may be cis, trans or mixtures thereof.

The dicarboxylic acid may be an aromatic diacid [acid (AR)] as previously described.

The non-crosslinked polyamide a) may also comprise amino-acid repeating units. These repeating units may arise from lactams or amino-acids, in particular chosen from caprolactam, 6-aminohexanoic acid, 10-aminodecanoic acid, 11-aminoundecanoic acid, and 12-dodecanolactam.

The amount of repeating units arising from lactams or amino-acids may range from 0.1 to 50 mol %, in particular from 0.1 to 10 mol %, and more particularly from 0.1 to 5 mol % relative to the total amount of repeating units in the polyamide.

According to a preferred embodiment, the non-crosslinked polyamide a) comprises recurring units derived from:
TMDP.T (trimethylenedipepiridine, terephtalic acid)
TMDP.I (trimethylenedipepiridine, isophthalic acid)
TMDP.DA (trimethylenedipepiridine, diphenic acid)
TMDP.T/6T (trimethylenedipepiridine, terephtalic acid, hexamethylene diamine)
TMDP.I/6I (trimethylenedipepiridine, isophthalic acid, hexamethylene diamine)
TMDP.T/9T (trimethylenedipepiridine, terephtalic acid, nonanediamine)
TMDP.I/9I (trimethylenedipepiridine, isophthalic acid, nonanediamine)
TMDP.T/10T (trimethylenedipepiridine, terephtalic acid, decanediamine)
TMDP.I/10I (trimethylenedipepiridine, isophthalic acid, decanediamine)
TMDP.T/TMDP.6 (trimethylenedipepiridine, terephtalic acid, adipic acid)
TMDP.I/TMDP.6 (trimethylenedipepiridine, , isophthalic acid, adipic acid)
TMDP.T/TMDP.10 (trimethylenedipepiridine, terephtalic acid, sebacic acid)
TMDP.I/TMDP.10 (trimethylenedipepiridine, isophthalic acid, sebacic acid).

According to another embodiment, the non-crosslinked polyamide a) is a homopolyamide, in particular an aliphatic homopolyamide, obtained through polymerisation of one a diamine of formula (3), with a dicarboxylic acid of formula (4).

In addition, the non-crosslinked polyamide a) may also comprise at least one, in particular one, mono-functional compound, such compounds may be chosen from monoamines, monoanhydrides, monoacids or α,β diacids such as they are able to from an intramolecular anhydride function, among chain limiters may be cited phthalic anhydride, 1-aminopentane, 1-aminohexane, 1-aminoheptane, 1-aminooctane, 1-aminononane, 1-aminodecane, 1-aminoundecane, 1-aminododecane, benzylamine, ortho-phthalic acid, or 1,2-benzenedicarboxylic acid, acetic acid, propionic acid, benzoic acid, stearic acid or their mixtures.

Amino End Groups (AEG) of the polyamide may be comprised from 5 to 550 meq/kg. Carboxylic End groups (CEG) of the polyamide may be comprised from 5 to 550 meq/kg. AEG and CEG may be measured by an acido-basic titration after solubilisation of the polyamide in a solvent. Sum of end groups (AEG + CEG) values may be comprised from 10 to 900 meq/kg, preferably from 150 to 600 meq/kg.

The molecular weight of the non-crosslinked polyamide a) according to the invention is not particularly limited and can be selected by the skilled person according to the requirements. It is, however, preferred that the number average molecular weight (Mn) of the non-crosslinked polyamide a) is higher than 2,500 g/mol, preferably higher than 3,000 g/mol. On the other hand, in view of its moldability and mechanical properties the molecular weight of the non-crosslinked polyamide a) should not exceed a certain limit. Therefore, the number average molecular weight (Mn) should be lower than 10,000 g/mol, preferably lower than 8,000 g/mol and even more preferably lower than 7,000 g/mol. The number average molecular weight (Mn) may range from 2,500 to 12,000 g/mol, notably from 2,500 to 10,000 g/mol, particularly from 3,000 to 10,000 g/mol. The number average molecular weight (Mn) of the non-crosslinked polyamide a) may be calculated by end groups analysis.

The non-crosslinked polyamide a) may also have a number average molecular weight (Mn) comprised from 6000 to 30000 g/mol, in particular from 10000 to 20000 g/mol, as notably determined by Size Exclusion Chromatography. The polyamide may have a weight-average molecular weight (Mw) comprised from 20000 to 150000 g/mol, in particular from 30000 to 100000 g/mol, as notably determined by Size Exclusion Chromatography. Preferably the Polydispersity Index, as a measure of the broadness of a molecular weight, defined by Mw/Mn ratio is comprised from 2 to 10, preferably from 2 to 8.

By determined by Size Exclusion Chromatography is meant a determination as follows: The Size Exclusion Chromatography for measuring relative molecular weights is performed in Hexafluoroisopropanol (HFIP) with 25 mM sodium trifluoroacetate (0.225 % w/w sodium trifluoroacetate in HFIP) as a solvent at 40°C, followed by refractometry RI. Determination of the relative molecular weight and molecular weight distribution is realised by a conventional calibration with polymethylmethacrylate standards (PMMA).

The number average molecular weight of the non-crosslinked polyamide a) may notably be controlled by the following means:
- by using chain limiter(s), i.e. mono-functional compounds, in particular such as defined above,
- by a stoechiometric desequilibrium r=[poly carboxylic acid]/[diamine], wherein r may range from 0.8 to 1.2, preferentially from 0.9 to 1.1,,
- by adjusting the synthesis parameters, such as the reaction time, temperature, humidity, or pressure, or
- by a combination of this different means.

One advantage of the non-crosslinked polyamides a) according to the invention is their low glass transition temperature. Preferably, the glass transition temperature of the non-crosslinked polyamide a) is below 210°C, more preferably below 180°C and even more preferably below 150°C.

The glass transition temperature (referred herein as Tg) is the point at which a material goes from a hard brittle state to a soft rubbery state. Amorphous polymers only have a Tg. Crystalline polymers exhibit a Tm (melt temperature) and typically a Tg since there is usually an amorphous portion as well ("semi"-crystalline). Tg of polymers may be measured by well known methods such as by Differential Scanning Calorimetry (DSC). Simply stated, DSC utilizes a heat flow technique and compares the amount of heat supplied to the test sample and a similarly heated "reference" to determine transition points. Tg is typically calculated by using a half-height technique in the transition region. The heating rate and sample heat history are a couple of factors that may affect the test result. Depending on the equipment capability, DSC can be used for a wide range of thermoplastic and thermoset polymers.

The non-crosslinked polyamide a) of the invention may be obtained by molten polymerisation from mixtures of monomers or from their salts.

The non-crosslinked polyamide a) may be obtained from polymerization medium which can, for example, be an aqueous solution comprising the monomers or a liquid comprising the monomers. Advantageously, the polymerization medium comprises water as solvent. This facilitates the stirring of the medium and thus its homogeneity. The polymerization medium can also comprise additives, such as chain-limiting agents. The polyamide is generally obtained by polycondensation between the various monomers, present in all or in part, in order to form polyamide chains, with formation of the elimination product, in particular water, a portion of which may be vaporized. The polyamide is generally obtained by heating, at high temperature and high pressure, for example an aqueous solution comprising the monomers or a liquid comprising the monomers, in order to evaporate the elimination product, in particular the water, present initially in the polymerization medium and/or formed during the polycondensation, while preventing any formation of solid phase in order to prevent the mixture from setting solid.

The polycondensation reaction may be carried out at a pressure from 20 mbar to 15 bar, notably from 100 mbar to 1 bar, for instance 200 to 500 mbar.

The polycondensation reaction may be carried out at a temperature from 100 to 380°C, in particular from 180 to 300°C, even more particularly from 250 to 300°C. The polycondensation may be continued in the molten phase at atmospheric or reduced pressure, so as to achieve the desired degree of progression.

The polycondensation product is a molten polymer or prepolymer. It can comprise a vapour phase essentially composed of vapour of the elimination product, in particular of water, capable of having been formed and/or vaporized.

This product can be subjected to stages of separation of vapour phase and of finishing in order achieving the desired degree of polycondensation. The separation of the vapour phase can, for example, be carried out in a device of cyclone type. Such devices are known.

The finishing consists in keeping the polycondensation product in the molten state, under a pressure in the vicinity of atmospheric pressure or under reduced pressure, for a time sufficient to achieve the desired degree of progression. Such an operation is known to a person skilled in the art.

The crystallinity of the non-crosslinked polyamides a) can be determined by measuring the heat of the fusion of the non-crosslinked polyamide a) ("ΔH_{f}"). In some embodiments, the non-crosslinked polyamides of interest herein can in particular exhibit a heat of fusion of no more than 75 Joules per gram ("J/g"). In some embodiments, the non-crosslinked polyamides a) can have a heat of fusion of no more than 50 J/g or no more than 40 J/g. The heat of fusion can be measured as described below.

In some embodiments, the non-crosslinked polyamides a) can in particular exhibit a selected thermal window, defined by the difference in the degradation temperature ("Td") and the melting temperature ("Tm") of the non-crosslinked polyamide a), as represented by the following formula: T_{d} - Tₘ of at least 20°C, in particular at least 40°C, especiialy at least 60° C. In some embodiments, the non-crosslinked polyamides a) can have a thermal windows of no more than 200° C or no more than 120° C. Td and Tm can be measured as described below and in the examples.

The non-crosslinked polyamide a) melting temperature ("Tₘ") and heat of fusion ("ΔH_{f}") can be measured according to ASTM D3418 standard method using a differential scanning calorimeter (TA Instruments DSC Q20) and a liquid nitrogen cooling system operated with TA Thermal Advantage and Universal Analysis software. The measurements can be carried out using a heating and cooling rates of 10° C/min. in a nitrogen atmosphere. The Tₘ and ΔH_{f} values can be determined from the second heating scan.

As (co)polyamides (b) that may be used according to the invention, mention may be made of semi-crystalline or amorphous (co)polyamides, ie. polyamides or copolyamides, such as aliphatic polyamides, semi-aromatic polyamides and, more generally, linear polyamides obtained by polycondensation between a aliphatic, cycloaliphatic or aromatic diacid, and a aliphatic, cycloaliphatic or aromatic primary diamine, the polyamides obtained by condensation of a lactam of an amino acid, the amino acid preferably being an omega amino acid generated by opening of a lactam ring, or the linear polyamides obtained by condensation of a mixture of these various monomers, copolyamides obtained by the polycondensation of combinations of said diacid, diamine and/or aminoacid.

More precisely, these (co)polyamides may be, for example, hexamethylene polyadipamide, polyphthalamides obtained from terephthalic and/or isophthalic acid, and copolyamides obtained from adipic acid, from hexamethylenediamine and from caprolactam.

At least one of the diacid, diamine and/or aminoacid monomer used in the polycondensation may comprise between 2 and 40 carbon atoms.

(Co)polyamides b) suitable for use in the compositions of the present invention may be defined as follows:
- polyamides obtained by polycondensation of at least an aliphatic dicarboxylic acid with an aliphatic, cycloaliphatic or aromatic diamine, such as PA 5.6, PA 6.6, PA 5.10, PA 5.12, PA 6.10, PA 6.12, PA 10.10, PA 10.6, PA 10.12, PA 12.12, PA 4.6, PA MXD6, PA 92, PA 102;
- polyamides obtained by polycondensatoin of an aromatic dicarboxylic acid and an aliphatic or aromatic diamine, such as polyterephthalamides of the type PA 4T, PA 9T, PA 10T, PA 10T/11, PA 10T/10I, PA 10T/6T, PA 10T/106, PA 1 1T, PA 12T, PA 13T or 6T/MT, PA 6T/6I, PA 66/6T, PA 66/6T/6I copolymers in various molar compositions in dicarboxylic acids, polyisophthalamides of the type PA 61, PA 6I/6T, polynaphthalamides of the type PA 10N, PA 11N, PA 12N, polyarylamides like Kevlar(R), as well as mixtures and (co)polyamides thereof;
- polyamides obtained by polycondensation of at least one aminoacid or lactam , the aminoacid being possibly obtained by hydrolysis of a lactam, such as PA 6, PA 7, PA 11, PA 12, PA 13, as well as mixtures and (co)polyamides thereof. Polyamide 6/66, polyamide 6/11, polyamide 6/12 and polyamide 11/12 can be mentioned as examples of (co)polyamides

The polycondensation product can also be subjected to a solid-phase postcondensation stage. This stage is known to a person skilled in the art and makes it possible to increase the degree of polycondensation to a desired value.
The process may be similar in its conditions to the conventional process for the preparation of polyamide of the type of those obtained from dicarboxylic acids and diamines, in particular to the process for the manufacture of polyamide 6.6 from adipic acid and hexamethylenediamine. This process for the manufacture of polyamide 6.6 is known to a person skilled in the art. The process for the manufacture of polyamide of the type of those obtained from dicarboxylic acids and diamines generally uses, as starting material, a salt obtained by mixing a diacid with a diamine in a stoichiometric amount, generally in a solvent, such as water. Thus, in the manufacture of poly(hexamethylene adipamide), the adipic acid is mixed with hexamethylenediamine, generally in water, in order to obtain hexamethylenediammonium adipate, better known under the name of Nylon salt or "N Salt".

The composition according to the invention can also contain other ingredients and/or additives commonly known in the art. Non-limiting examples of further ingredients and/or additives include heat-stabilizers, light and UV-light stabilizers, hydrolysis stabilizers, anti-oxidants, lubricants, plasticizers, colorants, pigments, antistatic agents, flame-retardant agents, nucleating agents such as talc, matifying agents such as titanium dioxide or zinc sulphide, bioactive agents, antisoiling agents, antifoam, catalysts such as H₃PO₄ or H₃PO₃, mold-release agents, fragrances, blowing agents, viscosity modifiers, flow aids, reinforcing fibers and the like. Among reinforcing fibers, carbon fibers and glass fibers can be mentioned. The kind and amount of ingredients and/or additives will be selected by the skilled person according to common practice.

The processes for preparing the the polyamides a) and b) of the composition according to the invention may be continuous or may be done batchwise.

It is also known, in continuous processes for the preparation of polyamide, to inject an inert gas, such as nitrogen, into the finishing reactor. This method benefits from the same advantages as the vacuum finishing, namely a better productive output of the finishing stage, without exhibiting its disadvantages. Specifically, this method makes it possible to easily limit the risk of decomposition of hot polymer by eliminating the risk of entry of oxygen into the finishing reactor. The inert gas, which is generally dry, also makes it possible to remove the water produced during the polymerization reaction, which makes it possible to accelerate the latter.

The composition according to the invention may be obtained by mixing the different ingredients, fillers and/or additives. The processing temperature may be adjusted to the melting temperature of the polyamide having the higher melting temperature. The compounds may be introduced simultaneously or sequentially. In general an extruder is used in which the material is heated, then melted and subjected to a shearing strength to mix the different compounds. According to specific embodiments, it is possible to use a masterbatch, in a molten state or not, before preparing the final composition. For example it is possible to prepare a masterbatch by mixing the resin and other ingredients.

In particular the composition may be obtained by a hot mixing of the different ingredients, for example in a mono- or twin-screw extruder, at a temperature allowing to keep the polyamide in a molten state; or by a cold mixing, for example in a mechanical stirrer. The composition is preferentially obtained through mixture of the components in a molten state. Generally, the obtained mixture is extruded as rods which are chopped into pieces to give pellets. The compounds may be added at any time of the preparation of the plastic material, in particular by hot or cold mixing with the plastic matrix. The addition of the compounds and of the additives may be done by adding these compounds in the molten plastic matrix as pure compounds or as concentrated mixtures in a matrix such as a plastic matrix.

Thus, according to another of its aspects, the present invention relates to a composition obtained by blending in melt of at least:
a) a non-crosslinked polyamide comprising structural units of formula (1): 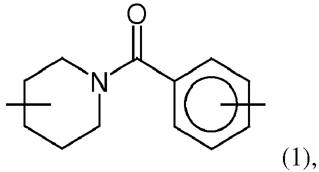 and
b) a (co)polyamide different from the non-crosslinked polyamide a).

The invention also relates to a method for preparing the composition according to the invention which comprises at least the step of blending in melt at least the non-crosslinked polyamide a) comprising structural units of formula (1): 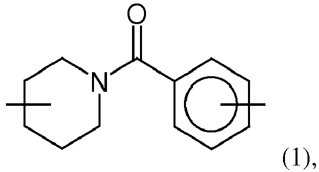 and
with the (co)polyamide b) different from the non-crosslinked polyamide a).

The invention also concerns a shaped article comprising a composition according to the invention. The shaped article may be a pellet, a powder, a granule, a rod, a bar, a complex structure obtained by injection molding or laser sintering, a tubing, a tank, a pipe, a hollow body, fibers, yarns, films, sheets, or a substrate, in particular a metallic substrate, coated by the composition. The article may be shaped according to the means known for shaping thermoplastic polymers. The shaped article may be obtained through moulding, either injection moulding, blow moulding, water moulding, extrusion, extrusion moulding, pelletizing, and underwater pelletizing.

The composition according to the invention exhibits good mechanical performance and high melt fluidity as well as high thermal stability. Therefore, the composition is useful for the preparation of molded articles and thermoplastic composite applications, like a thermoplastic composite comprising the composition of polyamides according to the invention and non-continuous and/or continuous fibers, such as glass or carbon fibers.

The molded articles which comprise the composition according to the invention can, for example, be an osmosis membrane or a medical implant.

The invention will now be explained in more detail with reference to the following examples, which are not intended as being limiting.

### EXAMPLE

For determining the properties of the obtained polyamide, the following methods were used:

### ▪ Thermogravimetric Analysis (TGA)

The TGA experiments were performed on raw samples in order to obtain a degradation temperature (T_{d}) at 1% mass loss which constitutes an important parameter to be considered for the DSCs. Mass loss was measured for each sample by increasing the temperature from 30 °C to 600 °C, with 10 ° C/min under air flow (presence of oxygen).

### ▪ Differential Scanning Calorimetry (DSC)

The glass transition temperatures (Tg) were measured using a DSC of the company TA instruments.
The DSC analysis was carried out in 3 cycles as follows:
- Cycle 1: -10°C to 350°C, 10°C/min
- Cycle 2: 350°C to 10°C
- Cycle 3: 10°C to 350°C (Tg)

### ▪ Tensile Properties

Bars were injected from the previously dried polymer granules to obtain test pieces for mechanical tests.

The tensile tests were carried out according to the ISO 527-2 standard corresponding to tensile tests on thermoplastic test pieces as follows:
- dumbbell tube type 5A,
- zeroing of the force sensor,
- placing the test piece in the jaws,
- clamping the jaws,
- set a zero force (by moving the crossbar) to neutralize the forces (tension / compression) that occur during tightening,
- start the test,
- once the pretension is reached (0.1MPa), position the extensometer by contact (L0: 20mm),
- removal of the sample at 2% deformation; the deformations of the specimen are then determined with the traverse displacement (corrected by a factor k, determined before the removal of the extensometer),
- stop the test when the test piece breaks.

Traverse speed during the determination of the module was 1mm/min.

Module was between 0.05 and 0.25% deformation.

Test speed after the module was 50mm/min.

Carboxylic acid end-groups (CEG) concentration and amine end-groups (AEG) concentration were determined by potentiometric titration (unit: meq/kg).

For the preparation of the polyamide a), the following starting materials were used:
Isophthalic acid, 99%, from Sigma-Aldrich.
4,4'-Trimethylenedipiperidine, 97%, from Sigma-Aldrich.

For the polyamide b), the following polyamide is used;
Semi-crystalline Polyphthalamide PA 9T having a Tm =306°C from Kuraray, Genestar™ 9T GC61010.

### The Production of a polyamide TMDP.I

The polyamide was prepared by polycondensation in the melt in a stirred pressure autoclave. 63.41 g (0.38 mol) of isophthalic acid and 82.39 g (0.39 mol) of 4,4'-Trimethylenedipiperidine were poured with 61.0 g of demineralized water, 0.012 g of phosphoric acid 85% and antifoam in a stainless steel clave. The clave atmosphere was purged with nitrogen, and the temperature was increased progressively to 220°C, with continuous stirring, letting pressure increase up to about 17.5 bar. The temperature was increased progressively up to 250°C, while maintaining the same level of pressure. The pressure was then progressively released while the temperature was increased to about 288°C. Vacuum was then applied to reach 500 mbar and kept for 30 min at the same temperature under continuous stirring. The vacuum was broken with nitrogen and the polymer was extruded in a strand. A glassy polymer was obtained which contained polyamide chains represented by the following formula: 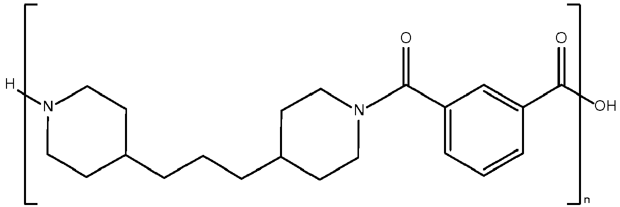 wherein n denotes the mole fraction of the polyamide repeating unit. The polymer thus obtained had the following analytical data:
The amorphous had, at a relative humidity of zero (RH0), a glass transition temperature Tg = 119 ° C, measured in DSC according to the protocol described above; and a thermal degradation Td = 380 ° C, measured according to the protocol described above.

End-groups titrations were as follow: CEG = 146 meq/kg, AEG = 103 meq/kg, corresponding to an estimated Mn of 8050 g/mol.

The mechanical properties of this TMDP.I were measured according to the conditions defined above after injection of specimen injected under the conditions described above. Under these conditions, the TMDP.I showed tensile behavior ductile with an elastic modulus (E) of 3210MPa, an ultimate elongation of 7%.

This TMDP.I has a viscosity at 100 rad/s= 99Pa.s at 340°C, measured with a rheometer ARES-G2 (cone/plate geometry, RH < 1000ppm).

Number average molecular weight (Mn) and weight-average molecular weight (Mw) have been also determined by Size Exclusion Chromatography and Polydispersity Index (PI=Mw/Mn) has been calculated. Size Exclusion Chromatography for measuring absolute molecular weights is performed in Hexafluoroisopropanol (HFIP) with 25 mM sodium trifluoroacetate (0.225 % w/w sodium trifluoroacetate in HFIP) as a solvent at 40°C, followed by refractometry RI. The system was calibrated using the set of narrow polydisperse PMMA standard samples.

| Mn eq PMMA (GPC) | Mw eq PMMA (GPC) | PI |
|---|---|---|
| 16224 | 67885 | 4.2 |

### The production of the composition

The polyamide granules of TMDP.I and 9T are pre-dried to a water content of less than 100 ppm (measured by Karl Fischer). They are then weighed in the proportion 70% by weight of TMDP.I and 30% by weight of 9T.

The mixture is made under nitrogen inerting by extrusion using the MicroLab II micro compounder from Thermo Scientific HAAKE. The system consists of 2 corotating conical screws and a loop recirculation circuit. Thus, the residence time of the material in the micro compounder can be controlled. Also the torque related to the rotation of the 2 screws and the pressure in the recirculation loop are measured. Then the bi-pass valve is opened allowing the transfer of the material into the injection cylinder of the MiniJet Pro of the same company. Tubes can then be injected to perform thermal and mechanical evaluations.

2.6 grams of the polyamide mixture defined above are introduced into the micro compounder MiniLab II. The set temperature is 370 ° C and the speed of the screws is 200rpm. The residence time in the molten state of the mixture is 2 minutes. The mixture thus obtained is transferred into the injection cylinder of the Minijet pro. The set temperature of the cylinder is 350 ° C. The temperature of the tooling, the injection mold is 90 ° C. The injection pressure is 950 bars and the holding time is 10 sec. Test pieces are thus obtained in order to carry out the thermal and mechanical evaluations.

The composition of polyamides according to the invention is amorphous with a Tg of 123°C.

## Claims

1. A composition comprising at least:
a) a non-crosslinked polyamide comprising structural units of formula (1): 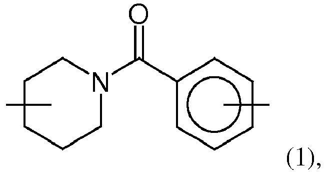 and
b) a (co)polyamide different from the non-crosslinked polyamide a).

2. The composition according to claim 1, wherein the non-crosslinked a) comprises structural units of formula (2): 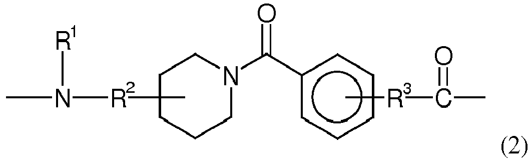
wherein R¹ is hydrogen, an organic monovalent residue, or an organic divalent residue which forms a ring together with R², and
R² and R³ are independently a bond or an organic divalent residue.

3. The composition according to claim 2, wherein R¹ is hydrogen or a linear, branched, cyclic and/or aromatic C₁₋₃₀ hydrocarbon residue which optionally forms a ring together with R², and R² and R³ are independently a bond or a linear, branched, cyclic and/or aromatic C₁₋₃₀ hydrocarbon residue.

4. The copolyamide according to claim 2 or 3, wherein R¹ is hydrogen or a C₁₋₆ alkyl residue which optionally forms a ring together with R², R² is a bond or a linear, branched and/or cyclic C₁₋₂₄ alkyl residue, preferably a bond or a linear C₁₋₂₄ alkyl residue, and R³ is a bond, a C₁₋₆ alkylaryl residue or an aryl residue, preferably a bond or a phenyl residue.

5. The composition according to any one of the preceding claims, in which the concentration of the non-crosslinked polyamide a) is from 10 wt.% to 95 wt.%, preferably from 10 wt.% to 80 wt.%, more preferably from 20 wt.% to 80 wt.%, relative to the total weight of the composition..

6. The composition according to any one of the preceding claims, in which the non-crosslinked polyamide a) is a homopolymer.

7. The composition according to any one of the preceding claims, wherein the non-crosslinked polyamide a) is obtainable by polymerization of a diamine of formula (3): 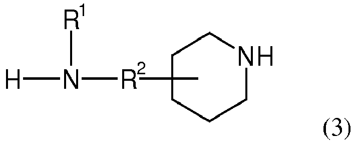 wherein R¹ and R² are defined as in any one of claims 2 to 4, with an aromatic dicarboxylic acid, ester or halogenide of formula (4): 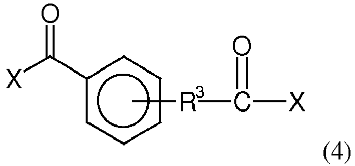 wherein R³ is defined as in any one of claims 2 to 4 and X is hydroxy, halogen, C₁₋₆ alkoxy or C₆₋₂₀ aryloxy.

8. The composition according to claim 7, wherein the diamine has the formula (5): 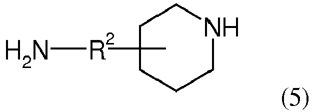 wherein R² is defined as in any one of claims 2 to 4.

9. The composition according to claim 7, wherein the diamine has the formula (6): 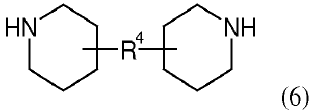 wherein R⁴ is a bond or a linear, branched and/or cyclic C₁₋₂₄ alkyl residue, preferably a bond or a linear C₁₋₂₄ alkyl residue.

10. The composition according to claim 7, wherein the diamine has the formula (7): 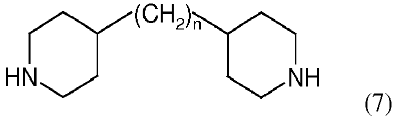 wherein n is an integer of 0 to 24, preferably 0 to 16, more preferably 3 to 16.

11. The composition according to any one of the preceding claims, wherein in the aromatic dicarboxylic acid, ester or halogenide of formula (4) R³ is a bond or aryl, preferably a bond or phenyl.

12. The composition according to claims 7 to 10, wherein the diamine is selected from 4,4'-bipiperidine, 4,4'-ethylenedipiperidine, 4,4'-trimethylenedipiperidine, 4-aminopiperidine, 4-(aminomethyl)piperidine, 2-(aminomethyl)piperidine, 3-(aminoethyl)piperidine, and 4-(aminobutyl)piperidine and the aromatic dicarboxylic acid is selected from isophthalic acid, terephthalic acid, diphenic acid, and biphenyl-4,4'-dicarboxylic acid; preferably wherein the diamine is selected from 4,4'-trimethylenedipiperidine and 4-aminopiperidine and the aromatic dicarboxylic acid is selected from isophthalic acid, terephthalic acid and diphenic acid.

13. The composition according to any one of the preceding claims, in which the non-crosslinked polyamide a) has a number average molecular weight (Mn) comprised from 2,500 to 12,000 g/mol.

14. The composition according to any one of the preceding claims, in which the non-crosslinked polyamide a) comprises structural units derived from:
TMDP.T (trimethylenedipepiridine, terephtalic acid)
TMDP.I (trimethylenedipepiridine, isophthalic acid)
TMDP.DA (trimethylenedipepiridine, diphenic acid)
TMDP.T/ 6T (trimethylenedipepiridine, terephtalic acid, hexamethylene diamine)
TMDP.I/ 6I (trimethylenedipepiridine, isophthalic acid, hexamethylene diamine)
TMDP.T / 9T (trimethylenedipepiridine, terephtalic acid, nonanediamine)
TMDP.I / 9I (trimethylenedipepiridine, isophthalic acid, nonanediamine)
TMDP.T / 10T (trimethylenedipepiridine, terephtalic acid, decanediamine)
TMDP.I / 101 (trimethylenedipepiridine, isophthalic acid, decanediamine)
TMDP.T/TMDP.6 (trimethylenedipepiridine, terephtalic acid, adipic acid)
TMDP.I/TMDP.6 (trimethylenedipepiridine, isophthalic acid, adipic acid)
TMDP.T/TMDP.10 (trimethylenedipepiridine, terephtalic acid, sebacic acid)
TMDP.I/TMDP.10 (trimethylenedipepiridine, isophthalic acid, sebacic acid).

15. A composition obtained by blending in melt of at least:
(a) a non-crosslinked polyamide comprising structural units of formula (1): 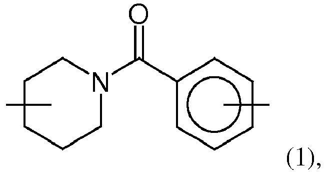 and
b) a (co)polyamide different from the non-crosslinked polyamide a).

16. Method of preparing the composition according to claims 1 to 14 comprising at least the step of blending in melt at least the non-crosslinked polyamide a) comprising structural units of formula (1): 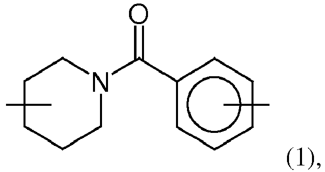 and
with the (co)polyamide b) different from the non-crosslinked polyamide a).

17. A molded article comprising a composition according to any one of claims 1 to 14 or according to claim 15.

18. A thermoplastic composite comprising a composition according to any one of claims 1 to 14 or according to claim 15 and non-continuous and/or continuous fibers, preferably glass or carbon fibers.
